(19) Europäisches Patentamt
European Patent Office
Office européen des brevets

(11) Publication number: **0 350 988 B2**

(12) **NEW EUROPEAN PATENT SPECIFICATION**

(45) Date of publication of the new patent specification: 27.12.95

(51) Int. Cl.6: **A23D 9/00**

(21) Application number: **89201706.2**

(22) Date of filing: **27.06.89**

(54) **Frying fat composition**

(30) Priority: **27.06.88 GB 8815223**

(43) Date of publication of application:
**17.01.90 Bulletin 90/03**

(45) Publication of the grant of the patent:
**02.12.92 Bulletin 92/49**

(45) Mention of the opposition decision:
**27.12.95 Bulletin 95/52**

(84) Designated Contracting States:
**AT BE CH DE ES FR GB GR IT LI NL SE**

(56) References cited:
EP-A- 235 836       EP-A- 0 233 856
EP-A- 0 287 157     EP-A- 0 290 420
EP-A- 0 290 421     EP-A- 0 291 106
US-A- 3 600 186

Extracts from the Food Additive Petition
(FAP) filed by the Procter & Gamble Com-
pany with the US Food and Drug Administra-
tion (FDA) in April 1987 in respect of
"Olestra"

US Federal Regulation 21CFR 171.1 (h)(1),
April 1978

(73) Proprietor: **UNILEVER N.V.**
**Weena 455**
**NL-3013 AL Rotterdam (NL)**

(84) Designated Contracting States:
**BE CH DE ES FR GR IT LI NL SE AT**

(73) Proprietor: **UNILEVER PLC**
**Unilever House**
**Blackfriars**
**P.O. Box 68**
**London EC4P 4BO (GB)**

(84) Designated Contracting States:
**GB**

(72) Inventor: **van Oosten, Cornelis Willem**
**Lindendreef 145**
**NL-3137 CL Vlaardingen (NL)**

(74) Representative: **Jorritsma, Ruurd et al**
**Nederlandsch Octrooibureau**
**Scheveningseweg 82**
**P.O. Box 29720**
**NL-2502 LS The Hague (NL)**

EP 0 350 988 B2

US Federal Regulation 21 CFR 171.1 (h)(1), April 1992

US Federal Register, Vol. 52, n 120, 23.6.87, Notices, page 23606

Report from FOI Services Inc. regarding a search of the log for month of June and July 1987

A.O.C.S. Official method Cc 3-25, entitled "Softening Point"

J.A.O.C.S., vol. 59, n 5 (05/82), pages 244-249

Information sheet entitled "Slip Point" dated 10/89

Bailey's Industrial Oil and Fat Products, vol. 2, fourth Edition (1982), pages 1-3, 10-11, 26-27

Food Oils and their uses, T.J. Weiss, AVI publishing Co (1983), pages 76/77 and 196/197

E.G. Latondres "Formulation of products from Soybean Oil", J.A.O.C.S. 58 (03/81), pages 185-187

R.W. Fallat et al, The Journal of Clinical Nutrition 29, 11/76, pages 1204-1215

International Standard ISO 6321

Synopsis of SPE DLK50

**Description**

The present invention relates to frying fat compositions, and in particular to such compositions in which convential triglyceride fat has been replaced by non-digestible polyol fatty acid polyester. It further relates to use of the frying fat compositions for frying and to the fried food products so obtained.

In the western world 30 to 50% of the energy intake is due to the consumption of fats and oils. Of this amount about 40% is consumed as 'visible' fat, such as butter, margarine, lard, shortening and edible oils. A considerable proportion of the 'visible' fats is introduced into the average diet by consumption of food products which are baked or fried in frying oils or fats, such as chips, crisps, battered and crumbed meat and fish products, and the like.

In view of the health hazards connected to obesity and unbalanced fat-intake there is a continuous interest in food products having a reduced caloric content. An attractive route to reduction of the caloric content in food products, such as in particular frying oils or fats and products fried therein, is replacement of conventional digestible fats and oils by non-digestible fat substitutes.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

Edible fat-containing products comprising indigestible polyol fatty acid polyesters are known in the art, and described in e.g. US 3,600,186, US 4,005,195, US 4,005,196, US 4,034,083 and EP 0 233 856, EP 0 236 288, and EP 0 235 836.

In the above art it is disclosed that in food products the use of polyol fatty acid polyesters which are liquid at body temperature, may give rise to the so-called problem of anal leakage. In this art it is suggested to solve this problem by increasing the amount of solids in the fat phase either by adding sufficiently solid matter to the fat phase or to select polyol fatty acid polyesters having a high fraction of solids particularly at 37°C.

However, when used for frying purposes, polyol fatty acid polyesters having a higher solid content have been found to give rise to various problems. Firstly, the fried products tend to suffer from mildewed polyester, i.e. polyol polyester prematurely crystallised onto the product surface after the frying operation. Secondly, even if a polyol polyester is selected having a lower solid content thereby reducing the risk of 'mildew' but increasing the risk of anal leakage, the fried products are found to have an unacceptably increased surface fattiness compared to similar products fried in conventional frying oils or fats, i.e. the polyol polyesters were found not to sufficiently penetrate the food product and/or sufficiently drip off.

It has now been found that the above problems of surface fattiness, poor drip-off and mildewing polyester can be overcome by using a frying fat composition, which comprises, in addition to a polyol fatty acid polyester of sufficient solids content, a substantial amount of conventional glyceride fat having a slip melting point of below 40°C.

Accordingly, in a first aspect the present invention provides a frying fat composition essentially consisting of a mixture of one or more non-digestible polyol fatty acid polyesters and one or more glyceride fats, characterized in that the composition comprises of from 40% to 75% by weight of said polyesters, the blend of said polyesters having a slip melting point of between 35 and 50°C, and the blend of said glyceride fats having a slip melting point of below 35°C, and more than 50% by weight of the fatty acid residues in the glyceride fats and polyol fatty acid polyesters being saturated fatty acid residues.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxylgroups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification by 'non-digestible' is meant that at least about 70% by weight of the material concerned is not digested by the human body.

In this specification, unless otherwise indicated, the term 'fat' refers to edible fats and oils consisting essentially of triglycerides, and which may be of animal, vegetable or synthetic origin. The terms fat and oil are used interchangeably.

Slip melting point can be conveniently defined as the temperature at which the amount of solid phase in a melting fat or fatty substance has become so low that an air bubble is forced upwards in an open capillary filed with the fat or fatty substance.

A first essential feature of the frying fat compositions of the present invention is the selection of the polyol fatty acid polyester or polyester blend on the basis of slip melting point. Suitable polyester blends have a slip melting point of between 35 and 50°C. Slip melting points below 35°C correspond to polyol fatty acid polyesters which although suitable from a technical point of view, constitute a potential danger of anal leakage, whereas slip melting points of over 50°C correspond to polyesters having an increased risk of mildewing after frying. Preferably, the blend of polyol fatty acid polyesters has a slip melting point in the range of 35 to 48°C, more preferably in the range of 35 to 45°C. Most preferably the blend of polyol fatty acid polyesters has a slip melting point in the range of 37 to 42°C.

A second essential feature of the frying fat composition of the present invention is the inclusion of a substantial proportion of a conventional glyceride oil to provide the composition with acceptable drip-off characteristics. Glyceride oils in accordance with the invention should have a slip melting point of below 35°C.

The glyceride oil is included, essentially as the balance of the composition, in an amount of at least 25% by weight to increase the drip-off after frying to an acceptable level, and in general is not included in an amount of over 75% by weight in order to benefit sufficiently from the calorie reduction due to the indigestible polyester.

We have found it advantageous to combine relatively high melting polyol fatty acid polyesters with relatively low melting glyceride fats. The glyceride fats used in the present frying fat composition suitably melt at a temperature below body temperature. Particularly good products, i.e. products that show essentially no mildewing, exhibit no drip-off problems and have very good frying properties are frying fat compositions containing glyceride fats having a slip melting point below 30°C.

For reasons of oxidative stability it is preferred that the glyceride fat has a slip melting point of at least 10°C. More preferably the glyceride fat has a slip melting point of at least 20°C. The combination of glyceride fat having a slip melting point of at least 20°C with polyol fatty acid polyesters having a slip melting point of above 35°C enables the preparation of plastic frying fat compositions which can be packaged in wrappers.

The present frying fat composition preferably comprises 40% to 70% by weight of polyol fatty acid polyesters and 60% to 30% by weight of glyceride fats. If relatively high levels of polyol fatty acid polyesters are employed, a layer of fat remains around the fried products after frying, which layer does hardly drip off. Also these fat layers impart a fatty mouthfeel to such fried products, which mouthfeel is significantly thicker than that of triglyceride fats and hence even more undesirable.

The replacement of substantial amounts of triglycerides by polyol fatty add polyesters in frying fat, generally, may have some adverse effects on the product quality. Surprisingly, however, the additional replacement of triglycerides by polyol fatty acid polyesters, even when 50 wt.% has been replaced already, does not significantly affect the product quality up till a replacement level of about 75 wt.%. According to a very preferred embodiment of the present invention the frying fat composition comprises 55% to 70% by weight of polyol fatty acid polyesters and 45% to 30% by weight of glyceride fats.

Suitable glyceride oils and fats include, optionally modified by partial hydrogenation and/or fractionation to provide the required melting characteristic, coconut oil, palmkernel oil, palm oil, buffer fat, soybean oil, safflower oil, cotton seed oil, rapeseed oil, poppy seed oil, corn oil sunflower oil, tallow, lard and mixtures thereof. Of these oils palm oil, partially hardened rape seed oil and partially hydrogenated soybean oil are preferred.

The presence of water in the frying fat composition according to the invention will result in spattering on frying. Therefore, preferably, the frying fat composition contains less than 3 wt.%, more preferably less than 2 wt.% of water.

According to yet another preferred embodiment of the present invention more than 50% of the fatty acid residues in the glyceride fats and polyol fatty acid polyesters present in the frying fat composition have a carbon chain length of 16 or 18. Preferably at least 60 wt.% of the fatty acid residues are saturated fatty acid residues.

Polyol fatty acid polyesters have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as source for the fatty acid residues in the polyol fatty acid polyesters. If necessary, conventional techniques may be used to provide the required slip melting points. Suitably such techniques include full or partial hydrogenation, in- teresterification, transesterification and/or fractionation, and may be used before or after conversion of the polyols to polyol fatty acid polyesters. Suitable sources of the fatty acid residues are vegetable oils and fats, such as in particular partially or fully hydrogenated palm oils, palm kernel oils and soybean oils.

Polyol fatty acid polyesters are applied of which, on an average, more than 70% of the polyol hydroxyl groups have been esterified with fatty acids. Preferably polyol fatty acid polyesters are used with higher degrees of conversion, in particular polyol fatty acid polyesters of which, on an average, more than 85% or even over 95% of the polyol hydroxyl groups have been esterified with fatty acids.

The frying fat composition according to the present invention may comprise in addition to the polyol fatty acid polyesters and the glyceride fats minor ingredients conventionally found in frying oils including anti-foams, such as silicon oils, anti-spattering agents, anti-oxidants, such as naturally present or added tocopherols, citric acid, ascorbic acid, butylated hydroxytoluene, -anisole or -quinone, flavouring agents, and the like. The present frying fat composition can also contain emulsifiers such as mono- and di-glycerides and lecithin. Preferably emulsifier constitute less than 3 wt.% of the product. More preferably the present frying fat composition contains less than 2 wt.% of emulsifier.

Another aspect of the present invention is the use of a frying fat composition, as described hereinbefore, for frying food products. When using the frying fat composition according to the invention for frying food products, suitably, frying temperatures in the range of 120-200°C are employed. The frying fat composition according to the invention can advantageously be used for both shallow and deep frying food products.

Food products which can suitably be fried in the present frying fat composition are: potato crisps, potato and corn chips, fried snacks, fried chicken, meat and fish products, battered & crumbed fish and meat products, such as e.g. fish sticks and the like. At the point of sale these food products may either be fully baked, or be in a frozen pre-fried condition requiring further preparation by oven or microwave.

The invention will now be further illustrated by way of the following examples.

EXAMPLE 1

A frying fat-composition was prepared having the following formulation:

| ingredients | % by weight |
|---|---|
| touch hardened soybean oil (slip melting point: 28°C) | 50 % |
| sucrose fatty acid polyester (SPE1) (slip melting point: 42°C) (fatty acid residues derived from 55 % fully hardened soybean oil, slip melting point 65°C, and 45 % touch-hardened soybean oil, slip melting point 28°C; degree of esterification over 95 %) | 50 % |

The above frying fat was used to fry sliced potato chips using conventional processing. The resulting fried product was fully comparable to similar products using a conventional frying fat, and at cooling did not suffer from any prematurely crystallised polyester or increased surface fattiness.

EXAMPLE 2

Fully similar results to example 1 were obtained with frying fat compositions wherein the weight ratios of sucrose fatty acid polyester (SPE1) to the touch-hardened soybean oil were 60:40 and 70:30.

EXAMPLE 3

Examples 1 and 2 were repeated, using touch-hardened rape seed oil (slip melting point 26°C) instead of touch-hardened soybean oil. The frying results obtained with this frying composition were satisfactory in that no premature fat solidification or increased surface fattiness was observed.

EXAMPLE 4

Again fully similar results were obtained with a frying fat composition having the following formulation:

| ingredients | % by weight |
|---|---|
| palm olein (slip melting point 18°C) | 25 % |
| sucrose fatty acid polyester (SPE1) | 75 % |

Again similar results were obtained with a frying fat composition comprising 50 % by weight of SPE1 and 50 % by weight of the palm olein.

EXAMPLE 5

Frying fat compositions were prepared on the basis of the following ingredients:

SPE1    sucrose fatty acid polyester (fatty acid residues derived from 55 % fully hardened soybean oil, slip melting point 65°C, and 45 % touch-hardened soybean oil, slip melting point 28°C; degree of esterification over 95 %) - slip melting point 42°C

SPE2    sucrose fatty acid polyester (fatty acid residues derived from 66 % fully hardened soybean oil, slip melting point 65°C, and 34 % touch-hardened soybean oil, slip melting point 28°C; degree of esterification over 95 %) - slip melting point 48°C

TAG    Touch hardend rape seed oil (slip melting point 26°C).

The composition of the frying fat products was as follows:

| Ingredients in wt.% | SPE1 | SPE2 | TAG |
|---|---|---|---|
| Frying fat 1 | | | 100 |
| Frying fat 1B | 25 | | 75 |
| Frying fat 1C | 50 | | 50 |
| Frying fat 1D | 75 | | 25 |
| Frying fat 1E | 100 | | |
| Frying fat 2B | | 25 | 75 |
| Frying fat 2C | | 50 | 50 |
| Frying fat 2D | | 75 | 25 |
| Frying fat 2E | | 100 | |

Freshly peeled potatoes were washed and cut into french fries of 1 by 1 by at least 7 cm. The french fries were pre-fried in the above frying fat compositions at 150°C for 6 minutes. After having left the pre-fried french fries to cool down till ambient temperature, they were fried again in the above frying fat compositions at a temperature of 180°C for 3 minutes.

A test panel was asked to evaluate several aspects of the fried product so obtained. The members of the testpanel were asked to rank a particular product aspect on a scale of 0 to 100. The final score for such a particular aspect was obtained by averaging the scores obtained from the test panel members.

The colour and general appearance of the fried products obtained with frying fats 1E and 2E was found to be signicantly worse than that of the fried products obtained with the other frying fat compositions, including the 100% triglyceride frying fat.

The crispiness of the french fries fried in the 100% triglyceride was found to be slightly better than that of french fries fried in sucrose polyester containing frying fat. No significant differences were observed for the products containing 25 to 75 wt.% sucrose polyester. The frying fat products containing 100 wt.% sucrose polyesters were found to give fried products that lacked sufficient crispiness.

The product aspects fatty taste, stickiness and the general impression of the fried french fries were also evaluated by the panel, giving the following results:

|  | fatty taste | stickiness | impression |
|---|---|---|---|
| Frying fat 1 | 35 | 47 | 67 |
| Frying fat 1B | 48 | 52 | 44 |
| Frying fat 1C | 58 | 58 | 42 |
| Frying fat 1D | 41 | 48 | 60 |
| Frying fat 1E | 68 | 66 | 18 |
| Frying fat 2B | 55 | 48 | 54 |
| Frying fat 2C | 45 | 50 | 67 |
| Frying fat 2D | 36 | 60 | 49 |
| Frying fat 2E | 68 | 80 | 12 |

In the above table a high score for fatty taste or stickiness indicates that the fried product has a strong fatty taste respectively that the fried product is rather sticky. A high score for the general impression indicates that the panel members were of the opinion that the fried product was of a good overall quality.

The above results show that french fries fried in frying fat compositions containing up to 75 wt.% of sucrose polyesters are of comparable quality, whereas the total subtitution with sucrose polyesters results in clearly worse frying results.

Also the drip off results obtained with the frying fat compositions containing up to 75 wt.% polyesters were found to be satisfactory. The french fries fried in frying fat contianing 100 % sucrose polyester, were found to give serious drip-off problems. Premature crystallization of fat was observed for both frying fats 1E and 2E and to a substantially less extent for frying fat 2D.

## Claims

1. A frying fat composition essentially consisting of a mixture of one or more non-digestible polyol fatty acid polyesters and one or more glyceride fats, characterized in that the composition comprises of from 40% to 75% by weight of said polyesters, the blend of said polyesters having a slip melting point of between 35 and 50°C, and the blend of said glyceride fats having a slip melting point of below 35°C, and more than 50 wt.% of the fatty acid residues in the glyceride fats and polyol fatty acid polyesters being saturated fatty acid residues.

2. Frying fat composition according to claim 1, characterized in that said glyceride fats having a slip melting point of at least 20°C.

3. Frying fat composition according to claim 1 or 2, characterized in that the blend of polyol fatty acid polyesters has a slip melting point in the range of 35° to 45°C.

4. Frying fat composition according to any one of claims 1-3, characterized in that the composition comprises 40% to 70% by weight of polyol fatty acid polyesters and 60% to 30% by weight of glyceride fats.

5. Frying fat composition according to claim 4, characterized in that the composition comprises 55% to 70% by weight of polyol fatty acid polyesters and 45% to 30% by weight of glyceride fats.

6. Frying fat composition according to any one of claims 1-5, characterized in that the composition contains less than 3 wt.% of water.

7. Frying fat composition according to any one of claims 1-6, characterized in that more than 50% of the fatty acid residues in the glyceride fats and polyol fatty acid polyesters have a carbon chain length of 16 or 18.

8. Use of a frying fat composition according to any one of claims 1-7 for frying food products.

## Patentansprüche

1. Bratfettzusammensetzung, die im wesentlichen aus einer Mischung von einem oder mehreren unverdaulichen Polyolfettsäurepolyestern und einem oder mehreren Glyceridfetten besteht, dadurch gekennzeichnet, daß die Zusammensetzung 40 bis 75 Gew.-% dieser Polyester umfaßt, wobei das Gemisch der Polyester einen Steigschmelzpunkt zwischen 35 und 50°C hat, das Gemisch der Glyceridfette einen Steigschmelzpunkt von unter 35°C hat, und mehr als 50 Gew.-% der Fettsäurereste in den Glyceridfetten und Polyolfettsäurepolyestern gesättigte Fettsäurereste sind.

2. Bratfettzusammensetzung nach Anspruch 1, dadurch gekennzeichnet, daß die Glyceridfette einen Steigschmelzpunkt von mindestens 20°C aufweisen.

3. Bratfettzusammensetzung nach Anspruch 1 oder 2, dadurch gekennzeichnet, daß das Gemisch der Polyolfettsäurepolyester einen Steigschmelzpunkt im Bereich von 35 bis 45°C aufweist.

4. Bratfettzusammensetzung nach einem der Ansprüche 1 bis 3, dadurch gekennzeichnet, daß die Zusammensetzung 40 bis 70 Gew.-% Polyolfettsäurepolyester und 60 bis 30 Gew.-% Glyceridfette umfaßt.

5. Bratfettzusammensetzung nach Anspruch 4, dadurch gekennzeichnet, daß die Zusammensetzung 55 bis 70 Gew.-% Polyolfettsäurepolyester und 45 bis 30 Gew.-% Glyceridfette umfaßt.

6. Bratfettzusammensetzung nach einem der Ansprüche 1 bis 5, dadurch gekennzeichnet, daß die Zusammensetzung weniger als 3 Gew.-% Wasser enthält.

7. Bratfettzusammensetzung nach einem der Ansprüche 1 bis 6, dadurch gekennzeichnet, daß mehr als 50 % der Fettsäurereste in den Glyceridfetten und Polyolfettsäurepolyestern eine Kohlenstoffkettenlänge von 16 oder 18 haben.

8. Verwendung einer Bratfettzusammensetzung nach einem der Ansprüche 1 bis 7 zum Braten von Nahrungsmittelprodukten.

**Revendications**

1. Une composition de matière grasse de friture composée essentiellement d'un mélange d'un ou plusieurs polyesters d'acides gras et de polyols non digestibles et d'une ou plusieurs matières grasses de glycéride, caractérisée en ce que la composition comprend de 40% à 75% en masse desdits polyesters, le mélange desdits polyesters ayant un point de passage à l'état de fusion compris entre 35 et 50°C, et le mélange desdites matières grasses de glycéride ayant un point de passage à l'état de fusion inférieur à 35°C, et plus de 50% en poids des résidus d'acide gras dans les matières grasses de glycéride et dans les polyesters d'acide gras et de polyol étant des résidus d'acide gras saturés.

2. La composition de matière grasse de friture selon la revendication 1, caractérisée en ce que les matières grasses de glycéride ont un point de passage à l'état de fusion d'au moins 20°C.

3. La composition de matière grasse de friture selon l'une des revendications 1 ou 2, caractérisée en ce que le mélange de polyesters d'acides gras et de polyols a un point de passage à l'état de fusion compris dans la gamme allant de 35° à 45°C.

4. La composition de matière grasse de friture selon l'une des revendications 1 à 3, caractérisée en ce que la composition comprend 40% à 70% en masse de polyesters d'acides gras et de polyols et 60% à 30% en masse de matières grasses de glycéride.

5. La composition de matière grasse de friture selon la revendication 4, caractérisée en ce que la composition comprend 55% à 70% en masse de polyesters d'acides gras et de polyols et 45% à 30% en masse de matières grasses de glycéride.

6. La composition de matière grasse de friture selon l'une des revendications 1 à 5, caractérisée en ce que la composition contient moins de 3% en masse d' eau.

7. La composition de matière grasse de friture selon l'une des revendications 1 à 6, caractérisée en ce que plus de 50% des résidus d'acide gras dans les matières grasses de glycéride et dans les polyesters d'acides gras et de polyols ont une longueur de chaîne de 16 ou de 18 atomes de carbone.

8. Utilisation d'une composition de matière grasse de friture selon l'une des revendications 1 à 7 pour frire des produits alimentaires.